# EUROPÄISCHE PATENTSCHRIFT

(11) **EP 1 407 165 B1**
(45) Veröffentlichungstag und Bekanntmachung des Hinweises auf die Patenterteilung: **07.12.2005**
(21) Anmeldenummer: 02750793.8
(22) Anmeldetag: 19.06.2002
(51) Int. Cl.: F16F 13/14, F16F 1/387

(54) **RADIAL DÄMPFENDES BUCHSENGUMMILAGER**
RADIALLY DAMPING RUBBER BUSHING BEARING
PALIER EN CAOUTCHOUC POUR COUSSINET, A AMORTISSEMENT RADIAL

(30) Priorität: 14.07.2001 DE 10134402
(43) Veröffentlichungstag der Anmeldung: 14.04.2004
(73) Patentinhaber: ZF Lemförder Metallwaren AG, 49441 Lemförde (DE)
(72) Erfinder: TATURA, Alfred, 49401 Damme (DE); HOPING, Claudia, 49393 Lohne (DE)
(86) Internationale Anmeldenummer: PCT/DE2002/002222
(87) Internationale Veröffentlichungsnummer: WO 2003/008837

(56) Entgegenhaltungen:
- DE-A- 3 942 655
- DE-A- 19 807 949
- US-A- 4 756 514
- US-A- 4 871 152
- US-A- 4 883 260
- US-A- 5 190 269
- PATENT ABSTRACTS OF JAPAN vol. 2000, no. 07, 29. September 2000 (2000-09-29) & JP 2000 120760 A (YAMASHITA RUBBER KK), 25. April 2000 (2000-04-25)

## Beschreibung

Die Erfindung betrifft ein radial dämpfendes Buchsengummilager, welches vorzugsweise als hydraulisch dämpfendes Gummilager ausgebildet ist.

Buchsengummilager werden in der Fahrzeugtechnik vielseitig eingesetzt. Dort dienen sie beispielsweise zur Lagerung von Teilen des Fahrgestells, so unter anderem für die Lagerung der Querlenker für die Radaufhängung. Je nach dem Einsatzfall wird die durch die Gummilager angestrebte radiale Dämpfung vielfach auch durch ein hydraulisch dämpfendes Fluid unterstützt, wobei zu diesem Zweck im Lagerkörper entsprechende Hydraulikkammern zur Aufnahme des Dämpfungsmittels ausgebildet sind.

Ein solches Gummilager wird beispielsweise in der DE 198 07 949 A1 dargestellt. Gemäß der üblichen Gestaltung besteht das in der Schrift dargestellte Lager aus einem rohrförmigen Innenteil, einer das rohrförmige Innenteil umgebenden Hülse und dem dazwischen eingeordneten, mit dem Innenteil durch Vulkanisation verbundenen elastomeren Lagerkörper. Das in der Schrift beschriebene Lager weist eine spezielle Geometrie auf. Auf dem Umfang des Innenteils sind in einem axialen Abschnitt zwei sich radial nach außen erstreckende Erhebungen vorgesehen. An diesen Erhebungen ist der Lagerkörper anvulkanisiert, wobei es sich hierbei um Wände in Form elastischer, hohler Kegelstümpfe handelt, die sich auf den in der axialen Mitte des Innenteils angeordneten Erhebungen abstützen und dieses axial sowie radial, also bezogen auf die axiale Richtung quasi diagonal nach außen verlaufend, mit der Außenhülse verbinden. Nach den Ausführungen der Schrift soll mit dieser vergleichsweise aufwendigen Geometrie erreicht werden, dass die radiale Dämpfung des Lagers nahezu ausschließlich durch das in den Kammern zwischen den elastischen Wänden und der Außenhülse zirkulierende Dämpfungsmittel bestimmt wird, während die Dämpfungswirkung durch das Elastomer im Grunde vernachlässigbar ist. Abgesehen von der etwas aufwendigen Geometrie, besteht ein Problem der bekannten Lösung darin, dass das radiale Dämpfungsverhalten des Lagers durch auftretende kardanische Kräfte nachteilig beeinflusst wird. Dies ist darauf zurückzuführen, dass bei kardanischen Kräften bereits ohne Einwirkung der zu dämpfenden radialen Kräfte durch das Verdrehen beziehungsweise Kippen des Innenteils sowie das Verformen der elastomeren Wände eine gewisse Verdrängung des Dämpfungsmittels von einer Kammer in die andere erfolgt.

Ein anderes Beispiel für ein Hydrolager ist in der DE 196 13 912 C2 beschrieben. Auch bei diesem Lager weist das Innenteil, zumindest entsprechend einer Ausgestaltungsvariante, im Bereich der axialen Lagermitte eine sich radial nach außen erstreckende Erhebung auf. Bei dem in der Schrift dargestellten Lager dient die von dem Elastomer umgebene und von einem zusätzlichen Element eingefasste Erhebung als Anschlagkörper im Hinblick auf radial einwirkende Kräfte. Durch die Einfassung mit dem Element wird die freie Oberfläche des Anschlagkörpers bei Belastung reduziert, so dass sich der Anschlagkörper verhärtet. Im Hinblick auf die Berücksichtigung kardanischer Beanspruchungen ist in der Schrift lediglich darauf verwiesen, dass die beiderseitigen Fußbereiche des Anschlagkörpers nicht vom Element umfasst werden, damit in diesem Bereich die Möglichkeit von Verformungen bei Torsionsbeanspruchung oder kardanischer Beanspruchung gegeben ist. Eine die kardanische Beanspruchung gezielt auffangende definierte Kardanikachse ist dadurch aber nicht gegeben, so dass auch bei diesem Lager bei kardanischer Beanspruchung das in der Kammer enthaltene Dämpfungsmittel teilweise verdrängt wird. Dadurch wird die radiale Dämpfungswirkung durch die kardanischen Kräfte in unerwünschter Weise beeinflusst.

Das Dokument US-A-4 871 152 zeigt die Merkmale des Oberbegriffs von Anspruch 1.

Aufgabe der Erfindung ist es, ein radial dämpfendes Buchsengummilager so auszubilden, dass dessen radiale Dämpfungswirkung weitestgehend gegenüber kardanischen Kräften entkoppelt wird.

Erfindungsgemäß wird die Aufgabe durch ein Buchsengummilager mit den Merkmalen des Hauptanspruchs gelöst. Vorteilhafte Ausgestaltungen beziehungsweise Weiterbildungen des erfindungsgemäßen Lagers sind durch die Unteransprüche gegeben.

Das Lager weist in an sich bekannter Weise ein vorzugsweise rohrförmiges metallisches Innenteil, einen das Innenteil umgeben den und mit diesem Innenteil durch Vulkanisation verbundenen elastomeren Lagerkörper sowie eine das Innenteil und den Lagerkörper aufnehmende Außenhülse auf. An dem Innenteil, welches eine im Wesentlichen zylindrische Form haben kann, aber auch in anderer Weise (beispielsweise mit quaderförmigem oder ovalem Querschnitt) ausbildbar ist, sind in einem axialen Abschnitt zwei, auf seinem Umfang einander gegenüberliegende und sich radial nach außen erstreckende, vollständig in das Elastomer eingebettete Erhebungen ausgebildet.

Erfindungsgemäß sind zudem in dem elastomeren Lagerkörper, nahe dem Innenteil, zwei sich, bezogen auf dessen Umfang, zwischen den Erhebungen nierenförmig erstreckende sowie axial durch den Lagerkörper hindurchlaufende Elastomerausnehmungen (Nieren) vorgesehen. Hierdurch ist das im Bereich der Nieren gegenüber der Außenhülse freistehende Innenteil im Wesentlichen nur über die Erhebungen radial verlaufend an den Lagerkörper Kraftübertragend angebunden. Gleichzeitig wird durch diese geometrische Gestaltung des Lagers quer zur Lagerachse eine durch die Scheitel der Erhebungen verlaufende definierte Kardanikachse ausgebildet. Durch die Ausbildung dieser definierten Kardanikachse sind die Bewegungen des Innenteils bei kardanischer Beanspruchung vorherbestimmt.
Außerdem ist das eigentliche Gummilager durch die quasi nur punktuelle Anbindung seines Innenteils gegenüber dem Gummilager im Hinblick auf auftretende kardanische Auslenkungen entkoppelt. In der Folge bleibt das radiale Dämpfungsverhalten des Lagers von kardanischen Krafteinwirkungen weitestgehend unbeeinflusst.

Die dargestellte Ausbildung bedingt demnach bei kardanischer Belastung eine Verteilung der auftretenden und am Innenteil wirkenden Momente derart, dass einem vergleichsweise großen äußeren Moment ein nur kleines inneres Moment im Bereich seiner Anbindung an den Lagerkörper gegenübersteht. Durch diesen Widerstand im Elastomerkörper im Bereich der Hydraulikkammern und den nur geringen Widerstand des Elastomerkörpers im Bereich seiner Anbindung am Innenteil bleiben die Hydraulikkammern bei kardanischer Belastung nahezu unbeeinflusst, was bedeutet, dass ein Kippen beziehungsweise Einknicken der Hydraulikkammern dadurch vermieden wird und die Funktion des Lagers erhalten bleibt.
Für das Lager ergeben sich insoweit erweiterte Einsatzmöglichkeiten, beispielsweise im Hinblick auf eine Komfortsteigerung bei Fahrzeugen mit großen Querlenkerauslenkungen, wie beispielsweise Off-Road-Fahrzeugen, Pik-Up's oder Van's.

Entsprechend einer praxisgerechten Ausbildung des erfindungsgemäßen Lagers sind die Erhebungen an dem Innenteil im Bereich der axialen Lagennitte ausgebildet, so dass sich auch die entstehende, die Lagerachse schneidende Kardanikachse axial mittig ausbildet. Je nach dem vorgesehenen Einsatzzweck können die Erhebungen aber auch in axialer Richtung zu einem der axialen Enden des Lagers verschoben sein.

Bei einer Ausführungsform als hydraulisch dämpfendes Gummilager sind durch zwei axial verlaufende Trennwände voneinander getrennte Ausnehmungen am Außenumfang des elastomeren Lagerkörpers zur Ausbildung zweier Kammern für ein hydraulisches Dämpfungsmittel vorgesehen, welche über einen Kanal flüssigkeitsleitend miteinander verbundenen sind. Dabei sind die den Lagerkörper an der Außenhülse abstützenden Kammertrennwände, bezogen auf den Lagerumfang, gegenüber den Erhebungen des Innenteils in einem Winkel α angeordnet. Gemäß einer möglichen Ausführung beträgt der Winkel α = 45°, wodurch sich, wie später noch zu erläutern sein wird, in vorteilhafter Weise ein im Hinblick auf das radiale Dämpfungsvermögen besonders großer Arbeitsbereich für das Lager ergibt. Aber auch bezogen auf den zwischen den Erhebungen und den Kammertrennwänden gebildeten Winkel α ist die konkrete Auslegung, wiederum abhängig von dem vorgesehenen Einsatzfall, so dass je nach der Lagerabstimmung auch andere Winkelverhältnisse denkbar sind.

Entsprechend einer besonders vorteilhaften Weiterbildung des erfindungsgemäßen Lagers sind die von dem Elastomer umgebenen Erhebungen im Bereich der durch sie gebildeten Anbindung des Innenteils an den Lagerkörper, bezogen auf dessen Umfangsrichtung beziehungsweise in Richtung der an sie angrenzenden Nieren, mit einer konvexen Oberfläche ausgebildet. Hierdurch entsteht für den Fall eines Einsatzes, bei dem das Lager stehend montiert ist, eine Art Dachrinneneffekt, durch den vermieden wird, dass sich in diesem Bereich Schmutz ablagert. Durch die konvexe Ausbildung der Oberfläche läuft eventuell vorhandener Schmutz dabei in die nierenförmigen Ausnehmungen des elastomeren Lagerkörpers ab. Zur Abstimmung des Kennungsverhaltens, also des radialen Dämpfungsverhaltens, können bei dem erfindungsgemäßen Lager außerdem noch, vorzugsweise metallische, Einlegeteile in den elastomeren Lagerkörper eingeschlossen sein. Außerdem kann bei einem mit hydraulischer Dämpfung ausgebildeten Lager die Abstimmung der radialen Dämpfung über die Länge des die Kammern miteinander verbindenden Dämpfungsmittelkanals erfolgen.

Die Erfindung soll anhand eines Ausführungsbeispieles näher erläutert werden. In den zugehörigen Zeichnungen zeigen.
- Fig. 1a:: Eine isometrische Darstellung eines Buchsengummilagers im Teilschnitt;
- Fig. 1b:: Eine isometrische Darstellung des Buchsengummilagers im Teilschnitt, jedoch ohne Innenteil;
- Fig. 2:: Einen axialen Schnitt durch das erfindungsgemäße Lager nach Fig. 1 entlang der Linie A-A unter Antragung der bei kardanischer Belastung auftretenden Momente;
- Fig. 3:: Das Lager nach Fig. 1 in einem 90° zur Linie A-A geführten axialen Schnitt und bei Einwirkung kardanischer Kräfte;
- Fig. 4:: Einen radialen Schnitt durch das Lager nach Fig. 1.

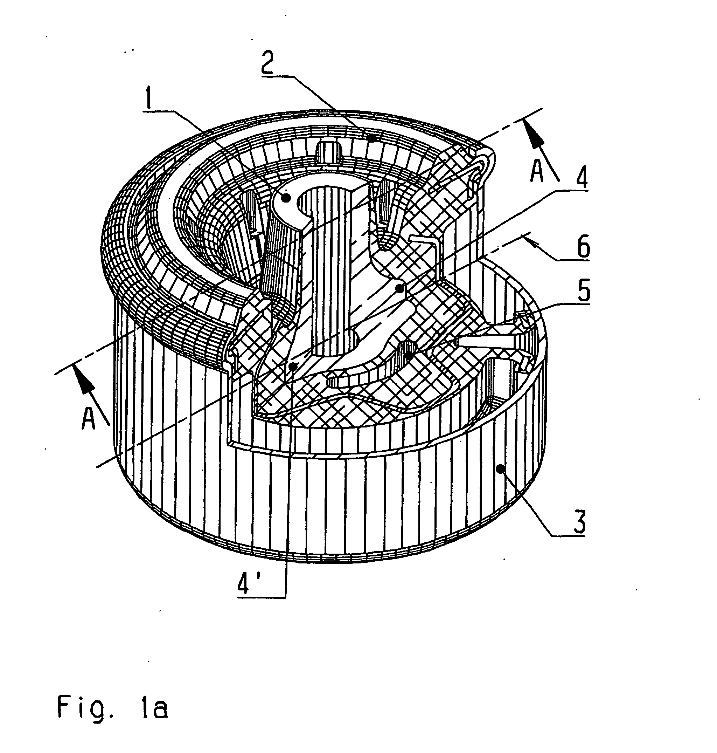

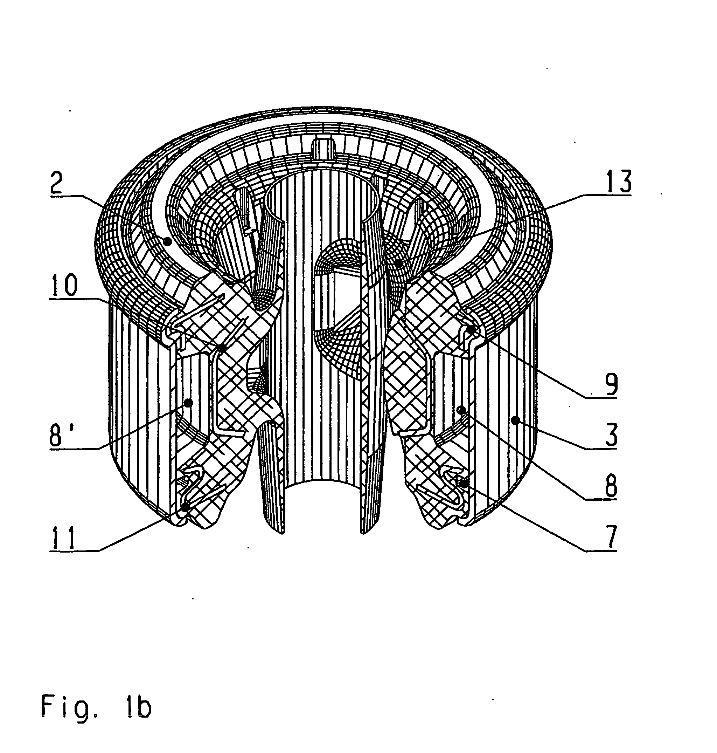

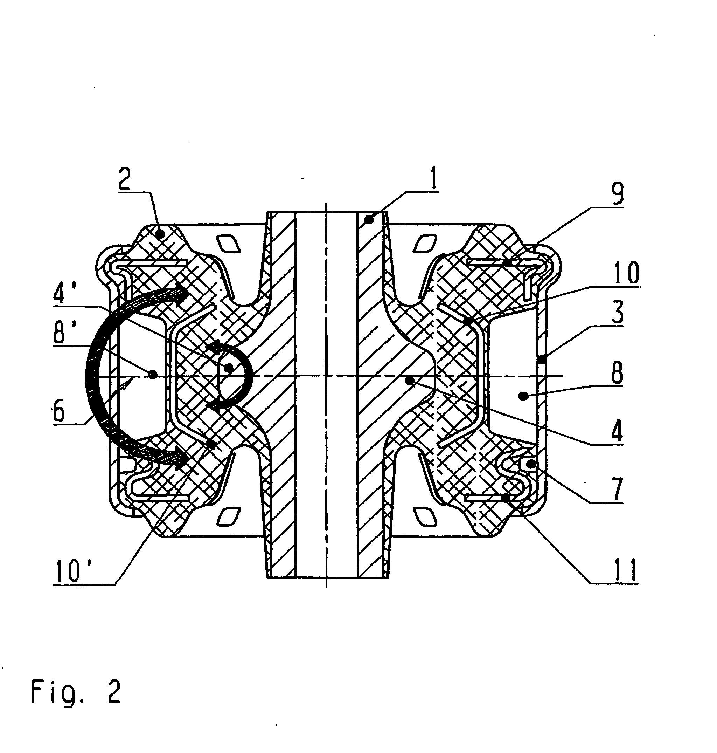

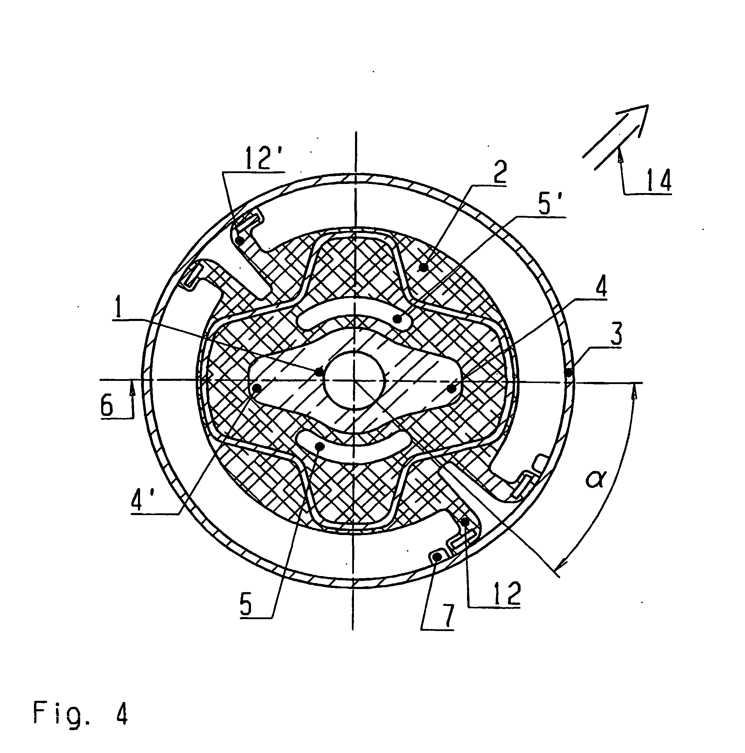

In den Fig. 1a und 1b ist das erfindungsgemäße Lager in einer isometrischen Darstellung gezeigt, bei welcher zur Ermöglichung eines Einblicks in das Lagerinnere in der Zeichnung Teile der Außenhülse und des Lagerkörpers ausgeschnitten wurden. Das im Beispiel gezeigte Lager ist als hydraulisch dämpfendes Gummilager ausgeführt. Es besteht in an sich bekannter Weise aus einem metallischen rohrförmigen Innenteil 1, dem das Innenteil 1 umgebenden und mit ihm durch Vulkanisation verbundenen elastomeren Lagerkörper 2 und der die vorgenannten Teile aufnehmenden Außenhülse 3, wobei das Lager in der Fig. 1b ohne das Innenteil 1 dargestellt ist. In der Fig. 1a, jedoch noch deutlicher in den Fig. 2 und 4 erkennbar, weist das Innenteil 1, etwa in der axialen Mitte, zwei sich gegenüberliegende und radial nach außen erstreckende Erhebungen 4, 4' auf. Die Erhebungen 4, 4' sind vollständig durch das Elastomer eingeschlossen, so dass sich unter gedachtem Fortfall des Innenteils 1 die in der Fig. 1b wiedergegebene Ansicht ergibt. Ferner ist zu erkennen, dass das Innenteil 1, mit Ausnahme der Anbindungen an den Erhebungen 4,4', im Übrigen frei stehend in den Lagerkörper 2 eingeordnet ist. Zwischen dem elastomeren Lagerkörper 2 und der Außenhülse 3 sind durch Ausnehmungen im Lagerkörper 2 - in der Fig. 1b besser erkennbar - Kammern 8, 8' zur Aufnahme eines hydraulischen Dämpfungsmittels ausgebildet. Die Kammern 8, 8' sind durch einen flüssigkeitsleitenden, nahezu um das gesamte Lager umlaufenden Kanal 7 miteinander verbunden, so dass das Dämpfimgsmittel zwischen den Kammern 8, 8' zirkulieren kann. Die radiale Dämpfungswirkung des Lagers resultiert aus dem Dämpfungsverhalten des Elastomers und dem Zirkulieren des hydraulischen von den Kammern 8, 8' aufgenommenen Dämpfungsmittels. Beim Auftreten radialer Belastungen wird dabei das Dämpfungsmittel aus der im Bereich der Belastung liegenden Kammer 8 oder 8' über den Kanal 7 in die jeweils andere Kammer 8' beziehungsweise 8 verdrängt (Massendämpfung). Durch die Zweipunktaufhängung im Bereich der Erhebungen 4, 4' an dem Innenteil 1 ist eine definierte, in den Fig. la und 2 angetragene Kardanikachse 6 ausgebildet. Beim Auftreten kardanischer Beanspruchungen kann sich das Innenteil 1 um diese Achse 6 herum bewegen (um die Achse 6 Kippen), ohne dass hierdurch das radiale Dämpfungsverhalten etwa durch ein von den kardanischen Kräften verursachtes Einknicken der Dämpfungsmittelkammern 8, 8' beeinflusst wird. Der äußere hydraulisch dämpfende Lagerteil ist vielmehr vollständig von auftretenden kardanischen Belastungen entkoppelt. Es liegt somit quasi eine "Lager-im-Lager-Anordnung" vor. Eine Verdrängung der durch die Kammern 8, 8' aufgenommenen Dämpfungsflüssigkeit findet dabei nur im Falle des Eintrags radialer Kräfte statt. Wie in der Zeichnung erkennbar, sind bei dem hier beispielhaft dargestellten Lager auch noch zusätzliche Einlegeteile 9, 10, 11 vom Elastomer eingeschlossen, durch welche das radiale Dämpfungsverhalten abgestimmt werden kann. Die Einlegeteile 9, 10, 11 können unterschiedlich gestaltet sein. So können beispielsweise die Einlegeteile 9 und 11 auch einstückig miteinander verbunden oder das Einlegeteil 10 durch zwei separate Teile ausgebildet sein.

Die Verhältnisse beim Auftreten kardanischer Belastungen sind durch die Darstellung in der Fig. 2 nochmals verdeutlicht. Die Fig. 2 betrifft eine Schnittdarstellung des Lagers nach der Fig. 1a mit einem entlang der Linie A-A geführten Schnitt. Beim Eintrag kardanisch wirkender Kräfte wird das von ihnen verursachte und am Innenteil 1 angreifende Moment in der durch die Figur verdeutlichten Weise aufgeteilt. Durch die gewählte Geometrie wird erreicht, dass dem großen äußeren Moment ein vergleichsweise kleines inneres Moment gegenübersteht. Deutlich sind in der Figur die Erhebungen 4, 4' an dem Innenteil 1 erkennbar. Ebenfalls wird nochmals die Ausbildung der Kammern 8, 8' und der Verlauf des sie verbindenden Kanals 7 erkennbar.

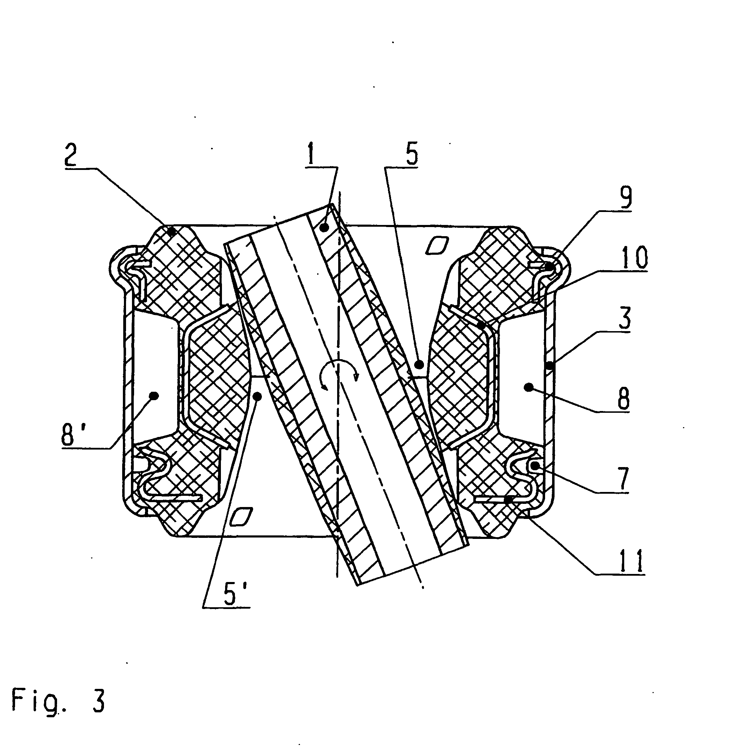

In der Fig. 3 ist das Lager nochmals in einer anderen Schnittdarstellung veranschaulicht, wobei das Lager unter Einwirkung kardanischer Kräfte dargestellt ist. Die Figur betrifft einen axialen Schnitt durch das Lager nach Fig. la mit einem 90° zur Linie A-A geführten Schnitt. Es wird deutlich erkennbar, dass durch die Erhebungen 4, 4' und die von ihnen ausgebildete Anbindung des Innenteils 1 an den Lagerkörper 2 eine Kardanikachse 6 (Achse verläuft in der Figur in die Zeichnungsebene hinein und ist daher selbst nicht dargestellt) gebildet ist, um welche das Innenteil 1 sich bei kardanischer Belastung bewegen kann. Erkennbar wird aber auch, dass die entstehende Neigung des Innenteils 1 gegen die Lagerachse die Verhältnisse im Lagerkörper 2 und in den Kammern 8, 8' überhaupt nicht beeinflusst, so dass die radiale Dämpfung im Grunde völlig unverändert bleibt.

Aus der Fig. 4, welche einen radial durch das Lager nach Fig. 1a geführten Schnitt zeigt, wird die Geometrie ebenfalls gut verdeutlicht. Die Kardanikachse 6 entsteht einerseits durch die Erhebungen 4, 4' und andererseits durch die gleichzeitig vorhandenen Elastomerausnehmungen 5,5', welche sich, bezogen auf den Umfang des Lagers, nahe dem Innenteil 1 nierenförmig zwischen den Erhebungen 4, 4' erstrecken. In axialer Richtung sind die Nieren 5, 5', wie aus Fig. 3 ersichtlich, durchgängig. Dies führt zu der schon beschriebenen Zweipunktanbindung mit der Ausbildung einer durch die Scheitel der Erhebungen 4, 4' sowie durch die Lagerachse verlaufenden Kardanikachse 6. In dem dargestellten Beispiel verläuft die Idealarbeitslinie 14 des Lagers auf Grund der gewählten Anordnung der Anbindungen 12, 12' zur Außenhülse 3, welche gleichzeitig die Kammern 8, 8' voneinander trennen, in einem Winkel von 45° zu der Kardanikachse 6. Hierdurch ergibt sich in vorteilhafter Weise für das Lager ein Arbeitsbereich von 90°. Je nach dem vorgesehenen Einsatzzweck und der damit verbundenen spezifischen Beanspruchung kann jedoch die Geometrie auch so ausgelegt sein, dass zwischen den Erhebungen 4, 4' und der Idealarbeitslinie 14 ein anderer Winkel gebildet ist.

Wie aus der Fig. 1b hervorgeht, ist die Außenfläche der vom Elastomer umgebenen Erhebungen 4, 4' in Umfangsrichtung konvex ausgeformt. Hierdurch ergibt sich der Vorteil, dass Schmutz, welcher sich bei einer senkrechten Einbauweise des Lagers in diesem Bereich gegebenenfalls ablagern könnte, über die Nieren 5, 5' ablaufen kann. In den gezeigten Figuren ist das erfindungsgemäße Lager in einer Ausbildung als hydraulisch dämpfendes Lager erläutert worden. Allerdings - und insoweit stellt die im Hauptanspruch verwendete Formulierung "vorzugsweise hydraulisch dämpfendes Gummilager" keine Beschränkung dar - lässt sich die hier lediglich am Beispiel des hydraulisch dämpfenden Lagers dargestellte erfinderische Lösung ebenso bei konventionellen Gummilagern einsetzen.

### Bezugszeichenliste

- 1: Innenteil
- 2: (elastomerer) Lagerkörper
- 3: Außenhülse
- 4, 4': Erhebung
- 5, 5': Ausnehmung, Niere
- 6: Kardanikachse
- 7: Kanal
- 8, 8': (Arbeits- beziehungsweise Dämpfungsmittel-) Kammer
- 9: Einlegeteil
- 10: Einlegeteil
- 11: Einlegeteil
- 12, 12': (Kammer-) Trennwand, Anbindung
- 13: Ablauf- beziehungsweise Abflussrinne

## Patentansprüche

1. Radial dämpfendes Buchsengummilager, vorzugsweise hydraulisch dämpfendes Gummilager, mit einem vorzugsweise rohrförmigen metallischen Innenteil (1), einem das Innenteil (1) umgebenden, mit ihm durch Vulkanisation verbundenen elastomeren Lagerkörper (2) und einer das Innenteil (1) und den Lagerkörper (2) aufnehmenden Außenhülse (3), bei dem das Innenteil (1) in einem axialen Abschnitt zwei, auf seinem Umfang einander gegenüberliegende und sich radial nach außen erstreckende, vollständig in das Elastomer eingebettete Erhebungen (4, 4') aufweist, **dadurch gekennzeichnet, dass** in dem elastomeren Lagerkörper (2), nahe dem Innenteil (1), zwei sich, bezogen auf dessen Umfang, zwischen den Erhebungen (4, 4') nierenförmig erstreckende sowie axial durch den Lagerkörper (2) hindurchlaufende Elastomerausnehmungen (5, 5') angeordnet sind, so dass das im Bereich der Nieren (5, 5') gegenüber der Außenhülse (3) freistehende Innenteil (1) im Wesentlichen nur über die Erhebungen (4, 4') an den Lagerkörper (2) Kraftübertragend angebunden und quer zur Lagerachse eine durch die Scheitel der Erhebungen (4) verlaufende definierte Kardanikachse (6) ausgebildet ist.

2. Radial dämpfendes Buchsengummilager nach Anspruch 1, **dadurch gekennzeichnet, dass** die Erhebungen (4, 4') an dem Innenteil (1) im Bereich der axialen Lagermitte ausgebildet sind.

3. Radial dämpfendes Buchsengummilager nach Anspruch 1 oder 2, ausgebildet als ein hydraulisch dämpfendes Gummilager, bei dem, in Form zweier durch axial verlaufende Trennwände (12, 12') voneinander getrennter Ausnehmungen, am Außenumfang des elastomeren Lagerkörpers (2) zwischen dem Lagerkörper (2) und der Außenhülse (3) Arbeitskammern (8, 8') zur Aufnahme eines hydraulischen, zwischen den Arbeitskammern (8, 8') über einen Kanal (7) zirkulierenden Dämpfungsmittels ausgebildet sind, wobei die Trennwände (12, 12') den Lagerkörper (2) an der Außenhülse abstützen.

4. Radial dämpfendes Buchsengummilager nach Anspruch 3, **dadurch gekennzeichnet, dass** die Trennwände (12, 12') bezogen auf den Lagerumfang, gegenüber den Erhebungen (4, 4') des Innenteils (1) in einem Winkel α angeordnet sind.

5. Radial dämpfendes Buchsengummilager nach Anspruch 4, **dadurch gekennzeichnet, dass** die Trennwände (12, 12'), bezogen auf den Lagerumfang, gegenüber den Erhebungen (4, 4')des Innenteils (1) in einem Winkel α von 45° angeordnet sind.

6. Radial dämpfendes Buchsengummilager nach einem der Ansprüche 1 bis 5, **dadurch gekennzeichnet, dass** das die Erhebungen (4,4') einschließende Elastomer, im Bereich der durch die Erhebungen (4, 4') ausgebildeten Anbindungen des Innenteils (1), an den Lagerkörper (2) in Richtung der angrenzenden Nieren (5, 5') eine konvexe Außenkontur aufweist, so dass im Falle des senkrechten Einbaus des Lagers, an diesen Stellen für sich ablagernden Schmutz eine in die Nieren (5, 5') mündende Ablaufrinne (13) gebildet ist.

7. Radial dämpfendes Buchsengummilager nach einem der Ansprüche 1 bis 6, **dadurch gekennzeichnet, dass** in den elastomeren Lagerkörper (2) zusätzliche Einlegeteile (9, 10, 11) zur Abstimmung des Kennungsverhaltens des Lagers eingeschlossen sind.

8. Radial dämpfendes Buchsengummilager nach einem der Ansprüche 3 bis 7, **dadurch gekennzeichnet, dass** das radiale Dämpfungsverhalten des Lagers durch Veränderung der Länge des die Kammern (8,8') verbindenden, in das Elastomer in der Nähe eines axialen Lagerendes eingearbeiteten und mit einer Öffnung zu jeder Kammer (8, 8') versehenen Kanals (7) bei der Fertigung variabel einstellbar ist.

## Claims

1. Radially damping rubber bush bearing, preferably a hydraulically damping rubber bearing, comprising a preferably tubular metal inner part (1), an elastomer bearing body (2) surrounding the inner part (1) and connected thereto by vulcanization, and an outer sleeve (3) accommodating the inner part (1) and the bearing body (2), wherein the inner part (1) in an axial portion has two radially outwardly extending bumps (4, 4'), which lie opposite one another on the periphery of the inner part (1) and are fully embedded into the elastomer, **characterized in that** disposed in the elastomer bearing body (2), close to the inner part (1), are two elastomer recesses (5, 5'), which extend, in relation to the periphery of the inner part (1), in a kidney-shaped manner between the bumps 4, 4' as well as axially through the bearing body (2), so that the inner part (1), which in the region of the kidney-shaped ports (5, 5') is free-standing relative to the outer sleeve (3), is workingly connected substantially only by the bumps (4, 4') to the bearing body (2) and a defined cardanic axis (6) extending through the crowns of the bumps (4) is formed transversely relative to the bearing axis.

2. Radially damping rubber bush bearing according to claim 1, **characterized in that** the bumps (4, 4') are formed on the inner part (1) in the region of the axial bearing centre.

3. Radially damping rubber bush bearing according to claim 1 or 2, designed as a hydraulically damping rubber bearing, in which, in the form of two recesses separated from one another by axially extending dividing walls (12, 12'), at the outer periphery of the elastomer bearing body (2) between the bearing body (2) and the outer sleeve (3) working chambers (8, 8') are formed for receiving a hydraulic damping medium that circulates between the working chambers (8, 8') through a channel (7), wherein the dividing walls (12, 12') support the bearing body (2) against the outer sleeve.

4. Radially damping rubber bush bearing according to claim 3, **characterized in that** the dividing walls (12, 12') are disposed, in relation to the bearing periphery, at an angle α relative to the bumps (4, 4') of the inner part (1).

5. Radially damping rubber bush bearing according to claim 4, **characterized in that** the dividing walls (12, 12') are disposed, in relation to the bearing periphery, at an angle a of 45 °relative to the bumps (4, 4') of the inner part (1).

6. Radially damping rubber bush bearing according to one of claims 1 to 5, **characterized in that** the elastomer enclosing the bumps (4, 4'), in the region of the connections formed by the bumps (4, 4') between the inner part (1) and the bearing body (2), has a convex external contour in the direction of the adjacent kidney-shaped ports (5, 5') so that, in the case of vertical installation of the bearing, at these points a drain (13) opening into the kidney-shaped ports (5, 5') is formed for dirt deposits.

7. Radially damping rubber bush bearing according to one of claims 1 to 6, **characterized in that** additional insert parts (9, 10, 11) for tuning the characteristic response of the bearing are enclosed in the elastomer bearing body (2).

8. Radially damping rubber bush bearing according to one of claims 3 to 7, **characterized in that** the radial damping properties of the bearing are variably adjustable in the course of manufacture by varying the length of the channel (7), which is incorporated into the elastomer in the vicinity of an axial bearing end and connects the chambers (8, 8') and is provided with an opening for each chamber (8, 8').

## Revendications

1. Palier en caoutchouc à coussinet produisant une amortissement radial, de préférence un palier en caoutchouc produisant un amortissement hydraulique, comportant une partie intérieure métallique de préférence de forme tubulaire (1), un corps de palier élastomère (2) entourant la partie intérieure (1) et relié à cette dernière par vulcanisation, et une douille extérieure (3) qui loge la partie intérieure (1) et le corps de palier (2), et dans lequel la partie intérieure (1) comporte, dans un tronçon axial, deux parties surélevées (4, 4') qui sont situées à l'opposé l'une de l'autre sur la périphérie de ce tronçon, s'étendent radialement vers l'extérieur et sont insérées entièrement dans l'élastomère, **caractérisé en ce que** dans le corps de palier élastomère (2) sont disposés, à proximité de la partie intérieure (1), deux évidements (5, 5') dans l'élastomère, qui s'étendent, d'une manière rapportée à la périphérie du corps de palier, en forme de haricots entre les parties surélevées (4, 4') et traversent axialement le corps de palier (2), de sorte que la partie intérieure (1) qui est en porte-à-faux dans la zone de la partie en forme de haricot (5, 5') par rapport à la douille extérieure (3), sont reliés essentiellement uniquement par l'intermédiaire des parties surélevées (4, 4') au corps de palier (2) de manière à transmettre une force et qu'un axe défini de cardan (6), qui passe par les sommets des parties surélevées (4), est disposé transversalement par rapport à l'axe du palier.

2. Palier en caoutchouc à coussinet produisant un amortissement radial selon la revendication 1, **caractérisé en ce que** les parties surélevées (4, 4') sont formées sur la partie intérieure (1) dans la zone centrale axiale du palier.

3. Palier en caoutchouc à coussinet produisant un amortissement radial selon la revendication 1 ou 2, agencé sous la forme d'un palier en caoutchouc réalisant un amortissement hydraulique, dans lequel sont formées, sous la forme de deux évidements séparés l'un de l'autre par des parois de séparation (12, 12') qui s'étendent axialement, et ce sur la périphérie extérieure du corps de palier élastomère (2) entre le corps de palier (2) et la douille extérieure (3), des chambres de travail (8, 8') servant à loger un milieu d'amortissement hydraulique qui circule entre les chambres de travail (8, 8') en empruntant un canal (7), les parois de séparation (12, 12') supportant le corps de palier (2) au niveau de la douille extérieure.

4. Palier en caoutchouc à coussinet produisant un amortissement radial, **caractérisé en ce que** les parois de séparation (12, 12') sont disposées, par rapport à la périphérie du palier, en faisant un angle α par rapport aux parties surélevées (4, 4') de la partie intérieure (1).

5. Palier en caoutchouc à coussinet produisant un amortissement radial selon la revendication 4, **caractérisé en ce que** les parois de séparation (12, 12') sont disposées, par rapport à la périphérie du palier, en faisant un angle α de 45° par rapport aux parties surélevées (4, 4') de la partie intérieure (1).

6. Palier en caoutchouc à coussinet produisant un amortissement radial, selon l'une des revendications 1 à 5, **caractérisé en ce que** l'élastomère qui entoure les parties surélevées (4, 4') possède un contour extérieur convexe dans la zone des liaisons, établies par les parties surélevées (4, 4'), de la partie intérieure (1), sur le corps de palier (2) en direction des parties contiguës en forme de haricots (5, 5'), de sorte que dans le cas du montage vertical du palier, une rainure d'évacuation (13), qui débouche dans les parties en forme de haricots (5, 5') est formée en ces emplacements, pour la saleté qui se dépose.

7. Palier en caoutchouc à coussinet produisant un amortissement radial, selon l'une des revendications 1 à 6, **caractérisé en ce que** des éléments d'insertion supplémentaires (9, 10, 11) pour le réglage d'accord du comportement caractéristique du palier sont insérés dans le corps de palier élastomère (2).

8. Palier en caoutchouc à coussinet produisant un amortissement radial selon l'une des revendications 3 à 7, **caractérisé en ce que** le comportement d'amortissement radial du palier est réglable de façon variable lors de la fabrication par modification de la longueur du canal (7) qui relie les chambres (8, 8'), est usiné dans l'élastomère à proximité d'une extrémité axiale du palier et est pourvu d'une ouverture débouchant dans chaque chambre (8, 8').
